# EUROPÄISCHE PATENTSCHRIFT

(11) **EP 2 092 780 B1**
(45) Veröffentlichungstag und Bekanntmachung des Hinweises auf die Patenterteilung: **29.02.2012**
(21) Anmeldenummer: 07821468.1
(22) Anmeldetag: 17.10.2007
(51) Int. Cl.: H04W 16/14

(54) **VERFAHREN ZUM AUSSCHLIESSEN FUNKTECHNISCHER KOLLISIONEN SICH IN IHREN BANDBEREICHEN TEILWEISE BEEINFLUSSENDER, INNERHALB EINER REGION BETRIEBENER FUNKFREQUENZ-SYSTEME**
METHOD FOR PRECLUDING RADIO COLLISIONS OF RADIO-FREQUENCY SYSTEMS THAT ARE OPERATED WITHIN A REGION AND PARTLY INFLUENCE ONE ANOTHER IN THEIR BAND RANGES
PROCÉDÉ POUR EXCLURE LES COLLISIONS RADIO DE SYSTÈMES FONCTIONNANT À FRÉQUENCE RADIO À L'INTÉRIEUR D'UNE ZONE ET DONT LES BANDES S'INFLUENCENT PARTIELLEMENT

(30) Priorität: 25.10.2006 DE 102006050199; 09.02.2007 DE 102007006590
(43) Veröffentlichungstag der Anmeldung: 26.08.2009
(73) Patentinhaber: GHMT AG, 66450 Bexbach (DE)
(72) Erfinder: SHYFRYN, Viachaslau, 66538 Neunkirchen (DE); WILHELM, Dirk, 66892 Bruchmühlbach-Miesau (DE)
(74) Vertreter: Meissner, Bolte & Partner
(86) Internationale Anmeldenummer: PCT/EP2007/061103
(87) Internationale Veröffentlichungsnummer: WO 2008/049771

(56) Entgegenhaltungen:
- WO-A-02/25506
- US-A1- 2003 078 051
- US-A1- 2004 047 324
- US-A1- 2006 227 751

## Beschreibung

Die Erfindung betrifft ein Verfahren zum Ausschließen funktechnischer Kollisionen sich in ihren Bandbereichen teilweise beeinflussender, innerhalb einer Region betriebener Funkfrequenz-Systeme.

Die gegenwärtigen Verfahren zum drahtlosen Austausch von Daten erobern gegenwärtig einen ständig größer werdenden Anwendungsbereich und sind mittlerweile aus dem alltäglichen praktischen Gebrauch in privaten Haushalten, aber vor allem im Unternehmensbereich nicht mehr wegzudenken. Die Verwendung drahtloser Kommunikationsverfahren, wie WLAN, GSM, RFID, Sprechfunk und dergleichen Verfahren mehr ermöglicht ein hohes Maß an Mobilität und Flexibilität, sie reduziert den bei drahtgebundenen Systemen auftretenden Verkabelungsaufwand beträchtlich und ist darüber hinaus sehr komfortabel.

Mittlerweile sind auf dem Markt eine Vielzahl von Funkanwendungen verfügbar, von denen besonders im Unternehmensbereich mindestens zwei, aber auch mehr auf engstem Raum und zeitlich parallel genutzt werden. So werden in Unternehmen zunehmend drahtlose WLAN-Netzwerke üblich, während eine gleichzeitige Kommunikation über das GSM-System, also Mobiltelefonie, stattfindet. Hinzu kommt oftmals auch eine Vielzahl kurzreichweitiger drahtloser Kommunikationsverfahren, beispielsweise ein Datentransfer über Bluetooth-Verbindungen, Funkfembedienungen mit Geräten aus dem Bereich der Unterhaltungselektronik und, vor allem im Produktionsbereich, eine Kommunikation über Sprech- und Betriebsfunkanwendungen. Es besteht dabei die wachsende Gefahr, dass eine nachteilige, kollidierende gegenseitige Beeinflussung der mannigfaltigen Funkanwendungen auftritt. Dieses Problem ist insofern weitaus heikler als der herkömmliche "Kabelsalat", weil die Wechselwirkungen und Kollisionen von Funksystemen oftmals nicht hinreichend bekannt sind. Im Falle von Störungen kann daher nicht ohne weiteres ermittelt werden, welche Störung einer gegebenen Funkanwendung durch welchen Funksender irgendeiner anderen Funkanwendung hervorgerufen wird. Oftmals sind sich die Beteiligten noch nicht einmal wirklich darüber im Klaren, welche Funksysteme in ihrem Bereich überhaupt vorhanden und aktiv sind.

Dies ist besonders vor dem Hintergrund problematisch, dass Funkfrequenzen in lizenzfreien Frequenzbereichen intuitiv und häufig unstrukturiert vergeben werden. In großen Unternehmen oder vergleichbaren Organisationen, die mit mehreren Außenstellen und Werken verbunden sind, sind Ansätze einer zentralen Verwaltung fehlgeschlagen. Entscheidungen dauern unter diesen Bedingungen aufgrund fehlenden Know-Hows zu lange und können andererseits auch nicht standardisiert getroffen werden. Diese Vorgehensweise führt dann zu Auseinandersetzungen und die Interessen der diversen Teilbereiche des Unternehmens bzw. der Organisation.

Das zur Verfügung stehende Frequenzspektrum für die Funksysteme bildet ein "shared medium". Das bedeutet, dass prinzipiell alle Frequenzen und Frequenzbänder offen und nicht streng voneinander abgetrennt sind. Sie können sich demzufolge gegenseitig beeinflussen. Die Regulierungsbehörden für drahtlose Informationsübertragungen und Funkanwendungen halten die entsprechenden Frequenzbänder lediglich für gewisse Anwendungen frei. Damit ist allerdings kein störungsfreier Betrieb der innerhalb der Bandbereiche aktiven Kommunikationsverbindungen gesichert. So können sich beispielsweise Funkanwendungen oder auch ungewollte Abstrahlungen im ISM-Band gegenseitig beeinflussen, wodurch der Datenaustausch einer Reihe prozess- und unternehmensrelevanter Systeme gefährdet oder zum Absturz gebracht werden kann.

Ein Beispiel hierfür für derartige Störungen im ISM-Bandbereich ist die Beeinflussung eines WLAN durch einen im Bereich des WLAN betriebenen Mikrowellenherd. Informative Messungen zeigten, dass durch das Einschalten eines Mikrowellenherdes der Datendurchsatz zwischen einem WLAN Access Point und einem WLAN-Client von 16 MBit/s auf etwa 6 MBit/s und damit etwa um beachtliche 40% gesenkt wird. Entsprechend langsam wird also das WLAN. Der absolute Wert der Beeinflussung ist von vielen Faktoren abhängig. In bestimmten Situationen können sogar WLAN-Verbindungsabbrüche entstehen, was für geschäftskritische Prozesse in einem Unternehmen nicht zugelassen werden darf.

Es versteht sich, dass daher ein "Wildwuchs" funktechnischer Anwendungen bei einer Vielzahl von Benutzern, Endgeräten und sonstigen funkaktiven Vorrichtungen und Geräten vermieden werden muss.

Ein "Frequenzmanagement", d.h. eine kontrollierte Vergabe und eine stets aktualisierte Übersicht, Koordination und Kontrolle aller Funksender zum Ausschließen funktechnischer Kollisionen ist deswegen vor allem für kommunikationsintensive und auf engem Raum arbeitende Unternehmen unerlässlich.

Zum Bewältigen eines derartigen umfangreichen und komplexen Problems wird bislang auf palliative und behelfsmäßige Mittel zurückgegriffen. In der Regel führt ein im Unternehmen damit beauftragter Mitarbeiter eine - mehr oder weniger elektronische, d.h. computerisierte - Liste, zum Beispiel eine Excel-Tabelle, in die er jeweils hinzukommende oder verschwindende funktechnische Anwendungen oder Funksender einträgt, eintragen lässt, löscht bzw. löschen lässt. Bei einer großen Mitarbeiterzahl bzw. einer wachsenden Zahl von Arbeitsplätzen geht dabei sehr schnell die Übersicht über die im betreffenden Bereich aktiven Funksender verloren. Derartige halb manuell geführte Listen werden nach einer gewissen Zeit entweder überhaupt nicht mehr beachtet oder gepflegt oder der mit der Verwaltung dieser Listen beauftragte Mitarbeiter des Unternehmens agiert in Anbetracht der zunehmenden Unübersichtlichkeit der Funksender restriktiver, als es eigentlich notwendig wäre.

In beiden Fällen werden dabei Ressourcen vergeudet, entweder dadurch, dass die Leistungsfähigkeit aller Funkanwendungen infolge der Kollisionen eingeschränkt wird oder dadurch, dass Technologien nicht zum Einsatz kommen, die eigentlich nützlich sind und unbedenklich hinzugefügt werden könnten. Es versteht sich, dass in beiden Fällen mit nicht unbeträchtlichen Zusatzkosten gerechnet werden muss.

Gemäß der Lehre nach US 2004/0047324 A1 sind ein Verfahren sowie ein System zur Verwaltung von drahtlosen Kommunikationsgeräten, die ein Frequenzband mit anderen fremden Geräten teilen, bekannt, wobei eine zentrale Verwaltungseinrichtung die Nutzung des geteilten Frequenzbandes koordiniert, indem vorhandene Funkzugangspunkte und abgesetzte Sensoren die von ihnen empfangenen Signale an die Verwaltungseinheit übermitteln. Signalparameter werden ausgewertet und zur Vergabe von Frequenzen und Sendeleistungen an die zu steuernden drahtlosen Kommunikationsgeräte übermittelt.

In der US 2006/0227751 A1 wird ein ähnliches Verfahren und System zur Zuweisung von Sendefrequenzen und Sendeleistungen für eine Vielzahl von Zugangspunkten eines drahtlosen Netzes gezeigt. Ein zentraler Verwaltungsknoten des Netzes enthält eine Datenbank mit Parametern von Zugangspunkten, wie Standorte und Sendeleistung. Der Verwaltungsknoten ermittelt Dämpfungen zwischen den einzelnen Zugangspunkten aufgrund von Messwerten (RSSI) der Zugangspunkte, die an den zentralen Verwaltungsknoten übertragen werden. Eine Zuweisung von Frequenz und Sendeleistung an die Zugangspunkte wird aufgrund der ermittelten Parameter durch den zentralen Verwaltungsknoten vorgenommen.

Es besteht die Aufgabe, ein weiterentwickeltes Verfahren zum Ausschließen funktechnischer Kollisionen sich in ihren Bandbereichen teilweise beeinflussender, innerhalb eines Gebietes parallel betriebener Funkfrequenz-Systeme mit einer Gesamtheit zugehöriger Funksender anzugeben, mit dem sich die genannten Probleme in einfacher und wirkungsvoller Weise lösen lassen.

Das Verfahren umfasst folgende kombinierte Verfahrensschritte:
Es erfolgt ein Erfassen der zur Gesamtheit gehörenden Funksender. In Verbindung damit wird ein messtechnisches Überprüfen auf mögliche gegenseitige Beeinflussungen der zur Gesamtheit gehörenden Funksender ausgeführt. In Verbindung damit erfolgt ein Verwalten der Gesamtheit der Funksender mit einer Datenerfassung und Speicherung von Funksender-Daten in einer Funksender-Datenbank. Anschließend erfolgt ein erfindungsgemäßes Registrieren einer Menge von Risikograden über negative gegenseitige Beeinflussungen der Funksender innerhalb der Gesamtheit und Zuordnung der Menge der Risikograde zur Gesamtheit der Funksender. Es erfolgt ein Analysieren der in der Datenbank gespeicherten Funksender-Daten auf gegenseitige Kollisionswahrscheinlichkeiten unter Zugriff auf die erfassten Risikograde. In Verbindung damit erfolgt ein Ausführen von Freigabe-, Administrations- und Sperrprozeduren für jeden Funksender auf der Grundlage der funksenderspezifischen Kollisionswahrscheinlichkeit.

Das Verfahren zielt somit darauf ab, die an sich bekannten gegenseitigen Beeinflussungen einzelner Funksender in einer gegebenen Gesamtheit möglichst direkt in eine zweckmäßige Gestaltung der Gesamtheit der Funksender umzusetzen und somit möglichst kurzfristig zu entscheiden, ob ein gegebener Funksender der Gesamtheit ohne Kollisionsrisiko hinzugefügt werden kann oder nicht, oder ob ein gegebener Funksender aus der Gesamtheit der Funksender entfernt werden muss. Das Verfahren ist somit auf eine Optimierung einer gegebenen Gesamtheit von Funksendern gerichtet. Dadurch werden zunächst alle Funksender erfasst und gegebenenfalls auf ihre mögliche Kollision überprüft. Die Kollisionsrisiken, also der Grad einer möglichen negativen Beeinflussung eines Funksenders auf die Gesamtheit wird jedem Funksender zugeordnet. Dies kann prinzipiell empirisch ermittelt werden und wird in der Funksender-Datenbank erfasst und verwaltet.

Das Verfahren bietet einem Nutzer die Möglichkeit, auch ohne tiefgreifendes Spezialwissen Funkfrequenzen zu verwalten und entsprechende Freigaben für seinen Einflussbereich zu erteilen. Im Vorfeld von Projekten ist es außerdem möglich, funkkompatible Geräte auszuwählen und so den Planungsprozess und Rollouts zu beschleunigen. Außerdem werden ein Zugriff auf eine unternehmensinterne Dokumentation der Untersuchungen, Erfahrungen und Freigaben von Funkanwendungen zur Verfügung gestellt, wodurch Fehlinvestitionen vermieden werden. Die Nutzung einer standardisierten Vorgehensweise und wie webbasierte Nutzung und auch durch Außenstellen fördert die Akzeptanz der strukturierten Verwaltung von Funkfrequenzen im ganzen Unternehmen.

Sind nun für jeden Funksender diese Kollisionsrisiken bekannt, wird durch die Funksender-Datenbank jeder nachteilige Funksender ermittelt. Die Gesamtheit der Funksender wird dadurch optimiert. Auf jeden Funksender, insbesondere jeden neu hinzu kommenden Funksender werden nunmehr Freigabe-, Administrations- und Sperrprozeduren angewandt. Damit wird ein Werkzeug geschaffen, bei dem zum einen die Gesamtheit der Funksender übersichtlich und in ihrer Komplexität erfasst, deren gegenseitige Beeinflussung überblickt und analysiert und schließlich durch eine Administration ein Wildwuchs der Gesamtheit der Funksender verhindert wird.

Das Erfassen und/oder messtechnische Überprüfen der Funksender umfasst ein Erfassen räumlicher Funksender-Standortdaten, technischer Funksender-Betriebsdaten und Funksender-Betreiberdaten in einem Datenbanksystem zur Funksenderverwaltung. Es wird somit erfasst, wo ein betreffender Funksender lokalisiert ist, welcher technischen Art der Funksender ist und wer ihn betreibt. Dies wird in einer Datenbank gespeichert.

Das Erfassen der räumlichen Funksender-Standortdaten kann in einer vorteilhaften Ausführungsform in Kombination mit einer Einordnung in ein 2D oder 3D-Standortschema unter Zugriff auf Gebäude-/Geländepläne aus einer CAD-Datenbank ausgeführt werden. Somit liefert diese Datenbank ein räumliches "Raster" oder eine dreidimensionale "Topographie" der Gebiete, Stockwerke, Räume usw., in der die Gesamtheit der Funksender angesiedelt ist. Es ermöglicht mit anderen Worten eine genaue Ortsbezeichnung des jeweiligen Funksenders, dessen Funksender-Standortdaten erfasst werden.

Das Erfassen der Funksender-Betriebsdaten beinhaltet mindestens ein Erfassen technisch relevanter funktechnischer Daten, wie z.B. einer Funksender-Art, einer Funksender-Leistung, eines Funksender-Frequenzbereichs und dergleichen Kenndaten. Das Erfassen der Funksender-Betreiberdaten beinhaltet ein Erfassen personenbezogener Daten. Damit ist einerseits der Funksender eindeutig beschrieben und zusätzlich personalisiert, wodurch sowohl technische Parameter als auch persönliche Verantwortlichkeiten eindeutig bezeichnet sind.

Das Ausführen der Freigabe-Prozedur umfasst eine Antragsprozedur mit einer anmeldenden Eingabe der Funksender-Daten auf einer ersten Verfahrenshierarchie, eine Antragsbewertungsprozedur mit einer Bewertung der angemeldeten Funksender-Daten unter Zugriff auf gespeicherte Funksender-Daten auf einer höheren Verfahrenshierarchie und eine Antragsentscheidungsprozedur mit einem Entscheid über eine Übernahme der Funksender-Daten in die Funksender-Datenbank mindestens auf der höheren Verfahrenshierarchie. Gegebenenfalls kann die Prozedur an interne Prozesse eines Unternehmens angepasst werden.

Ein neu hinzu kommender Funksender wird somit in einer eindeutigen Weise erfasst. Dies geschieht auf einer ersten Hierarchieebene. Die Bewertung der erfassten Daten erfolgt auf einer höheren Hierarchieebene. Dies stellt sicher, dass derjenige, der die Funksender-Daten eingibt und somit anmeldet, nicht derjenige ist, der über die Bewertung der Daten entscheidet. Ein Missbrauch wird somit ausgeschlossen. Die Übernahme der Funksender-Daten in die Funksender-Datenbank wird mindestens auf der höheren Hierarchieebene entschieden und sichert damit eine administrative Struktur der Freigabe-Prozedur.

Beim Ausführen der Antragsprozedur, der Antragsbewertungsprozedur und der Antragsentscheidungsprozedur erfolgt eine Lokalisierung des beantragten Funksender-Standorts entweder durch die Angabe von Gelände-/Gebäudekoordinaten oder direkt in die 2D- oder 3D-Standortpläne der CAD-Datenbank. Das heißt, dass der Standort des beantragten Funksenders in einer möglichst genauen und eindeutigen Weise angegeben werden muss und der Funksender damit einen eindeutigen Platz erhält und für genau diesen Platz beantragt wird und somit nicht unkontrolliert an einem unbekannten Ort stationiert wird. Für mobile Anwendungen, beispielsweise Mobiltelefone oder Sprechfunkgeräte, können Einsatzbereiche definiert werden, in denen diese eingesetzt werden dürfen. Zur Visualisierung kann dazu eine Darstellung der Funksender-Positionen/Bereiche auf dem Standortschema realisiert sein.

Der Aufruf des 2D- oder 3D-Standortschemas erfolgt in einer komfortablen Ausgestaltung des Verfahrens graphisch. Dabei wird die Standortkoordinate mittels einer graphikerzeugenden Darstellung in eine topographische oder Grundrissdarstellung eingefügt. Mit anderen Worten kann derjenige, der den Funksender beantragt, direkt die Topographie des dafür vorgesehen Geländes oder einen Gebäude- bzw. Raumgrundriss graphisch wie in einem interaktiven Lageplan einsehen und dort ebenfalls graphisch den vorgesehenen Standort des Funksenders markieren, anklicken oder in sonstiger Weise markieren.

Die Antragsprozedur enthält eine Antragsbearbeitungs-Prozedur mit einer Änderungsmöglichkeit der eingegebenen Funksender-Daten auf einer gleichen oder höheren Verfahrenshierarchie. Das heißt, dass entweder der Antragsteller selbst oder ein hierarchisch über ihm stehender Benutzer mit umfassenderen Administrationsrechten jederzeit die eingegebenen Daten nachträglich bearbeiten und verändern kann. Die hierarchische Abstufung sichert, dass auf einer niedrigeren Hierarchie eingegebene und auf einer höheren Hierarchie verwaltete Daten nicht durch Unbefugte verändert werden können.

Als Bescheinigung der erfolgten Beantragung oder Freigabe, sowie zur Verwendung bei internen Betriebsprozessen wird eine Ausgabe eines Funksender-Zertifikates realisiert, das wesentliche Daten des Funksenders, zum Beispiel Antrags- und Freigabedaten, funktechnische Parameter usw., beinhaltet.

Das Verwalten der Gesamtheit der Funksender umfasst ein administratives Verwalten von Datensatzstrukturen der Funksender-Daten, insbesondere von Funksender-Kategorien, Standort-Kategorien, Betreiber-Kategorien und personenbezogenen Betreiberdaten auf einer höchsten Verfahrenshierarchie. Auf der obersten "Administrationsebene" können somit die kategorialen Rahmen zum Erfassen aller Funksender flexibel angepasst, eingerichtet und verändert werden, um das Erfassen der Funksender-Gesamtheit in einer möglichst genauen Weise auszuführen.

Das Verwalten der Funksender-Kategorien umfasst insbesondere ein Hinzufügen, Ändern und/oder Löschen einer Funkfrequenz-System-Kategorie. Damit kann zum Beispiel festgelegt werden, welche Funkfrequenz-Systeme für die Gesamtheit der Funksender zulässig sind und welche nicht. Über ein Bearbeiten dieser Kategorie können Funkfrequenz-Systeme hinzugefügt oder gelöscht werden. Damit können Setzungen beliebig restriktiv erfolgen. Bei der Auswahl der jeweiligen Funksender-Kategorie kann der Benutzer auf unternehmensinteme Standards oder eine Liste bereits freigegebener Geräte aufmerksam gemacht werden. Damit kann eine effektive Umsetzung interner, vorgegebener Regelungen zum Einsatz von Funksystemen erreicht werden.

Das Verwalten der Standortkategorien umfasst alle notwendigen Verwaltungsfunktionen, wie z.B. ein Hinzufügen, Ändern und/oder Sperren reeller räumlicher Gebiete und logisch beschreibbarer Bereiche. Dadurch kann in einer eindeutigen Weise bestimmt werden, welche Funksender welches Funkfrequenz-Systems an welchen Ort überhaupt zulässig ist. Es lässt sich damit zum Beispiel festlegen und kontrollieren, dass GSM- oder WLAN-Geräte in einem medizinisch-technischen Laborbereich verboten sind und durch andere Arten von Funksendern zu ersetzen sind.

Das Verwalten der Betreiber-Kategorien und Betreiberdaten umfasst ein Hinzufügen, Ändern und/oder Sperren von organisationstechnischen, logistischen oder personenbezogenen Einzeldaten. Bestimmte Betreiber können dadurch von der Benutzung bestimmter Funksender ausgeschlossen werden.

Das Verwalten der Gesamtheit der Funksender umfasst schließlich Auswertungs- und Suchprozeduren mit frei definierbaren Suchfiltern und Anzeigemodi sowie Vorhersageprozeduren zum Ermitteln einer Wirkungsprognose eines neu einzuführenden Funksenders. Damit können alle vorhandenen Funksender nach jeweils gewählten Suchfiltern ausgegeben und angezeigt werden. Es ist dabei insbesondere möglich, die Standorte der Funksender anzuzeigen und zu beurteilen, ob ein neu hinzukommender Funksender an seinem geplanten Standort nachteilige Wirkungen entfaltet oder nicht.

Zur Verwaltung der Ergebnisse von bereits durchgeführten messtechnischen Untersuchungen bzw. Freigabemessungen kann eine Verknüpfung zu einer Datenbank der Ergebnisse bzw. zu einem Verzeichnis, in dem diese Ergebnisse abgespeichert sind, hergestellt werden.

Ein informationsverarbeitendes System zum Ausführen des Verfahrens umfasst eine hardwareartige Gesamtheit von Benutzer-Endgeräten und einem Web-Server mit einer über TCP/IP kommunizierenden E-Client/Web-Client-Architektur als Benutzer-Schnittstelle in Verbindung mit einer Gesamtheit von für einen Datenbankbetrieb vorgesehenen Application-Servern mit einer softwareartig auf den Application-Servern lauffähigen Gesamtheit von Datenbanken.

Einer der Application-Server ist zum Betreiben der CAD-Datenbank ausgebildet. Er stellt somit das Standortschema bereit.

Der Web-Server enthält softwareseitig eine Web-Server-Applikation, (z.B. Apache WebServer(R)).

Alternativ kann eine andere Realisierung der Software auf Basis einer Client-Server-Architektur erfolgen, z.B. über die nicht Web-basierenden Client-Server-Anwendungen.

Zu einer schnellen Einpflegung der bestehenden Daten zu den Funkanwendungen sind Importfilter vorgesehen.

Zur Visualisierung sind folgende Funktionen vorgesehen:

Darstellung eines Kollisionspotenzials zwischen den Funksystemen (z.B. in Form einer Kompatibilitätsmatrix). Die Funksysteme mit einem hohen Kollisionspotenzial bedürfen einer tiefer gehenden und ggf. messtechnisch unterstützten Analyse der Funkverträglichkeit. Dieser Hinweis mit dem Benutzer in geeigneter und auffallender Form, z.B. durch ein Warnfenster, mitgeteilt.

Außerdem kann eine Frequenzbelegung im Gebäude bzw. auf dem Gelände anschaulich dargestellt werden. Hierzu ist zum Beispiel ein Anzeigen eines Frequenzstrahls, d.h. eines stilisierten Spektrums, möglich, in dem die einzelnen registrierten Anwendungen aufgeführt sind.

Das erfindungsgemäße Verfahren soll anhand eines Ausführungsbeispiels näher erläutert werden. Zur Verdeutlichung dienen die beigefügten Figuren. Es werden für gleiche bzw. gleichwirkende Verfahrensschritte und Komponenten die selben Bezugszeichen verwendet.

Es zeigt:

Fig. 1 eine schematische Darstellung einer Funksender-Gesamtheit,

Fig. 2 ein schematisches Blockdiagramm mit grundlegenden Verfahrensabläufen,

Fig. 3 eine schematische Darstellung von Standortkoordinaten am Beispiel eines Gebäudes mit einer Liegenschaft,

Fig. 4 schematische Darstellungen beispielhafter Graphiken zum Anzeigen und graphischen Auswählen von Geschoss- und Raumkoordinaten in einem Gebäude,

Fig. 5 eine beispielhafte tabellarische Darstellung von Kollisionsrisiken,

Fig. 5a eine beispielhafte Darstellung einer Frequenzbelegung

Fig. 6 einen ersten Abschnitt einer Freigabeprozedur,

Fig. 7 beispielhafte Dialogfelder zum anmeldenden Eingeben von Funksenderdaten,

Fig. 8 ein beispielhaftes Funksenderzertifikat,

Fig. 9 ein Beispiel für ein Dialogfeld für eine administrative Kategorienverwaltung,

Fig. 10 ein Beispiel für ein Dialogfeld für eine administrative Benutzerverwaltung

Fig. 11 ein Beispiel für eine administrative Verwaltung von Unternehmensbereichen,

Fig. 12 ein beispielhaftes Dialogfeld für eine Benutzerverwaltung,

Fig. 13 eine beispielhafte Dialogbox zum Setzen von Suchfiltern und zur Auflistung von Suchresultaten,

Fig. 14 eine tabellarische Auflistung über die Verteilung beispielhafter Zugriffsberechtigungen.

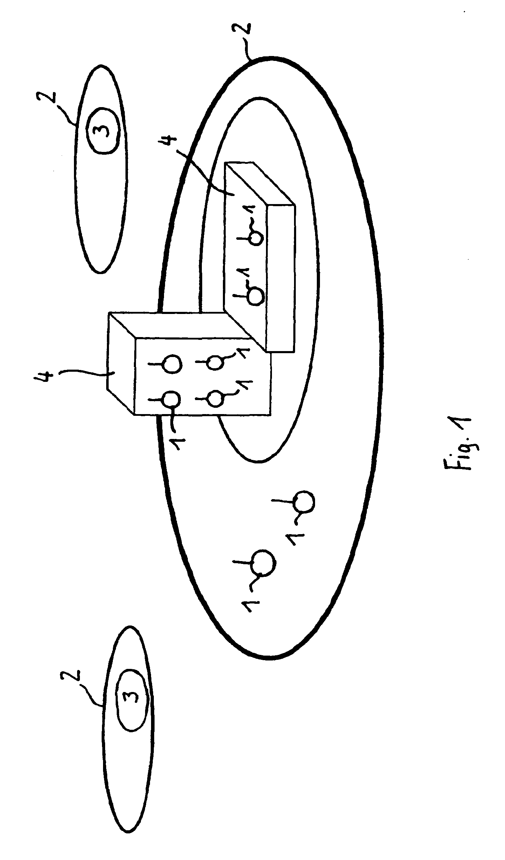

Fig. 1 zeigt eine typische Funksender-Gesamtheit. Diese besteht aus einer Reihe von Funksendern 1, die innerhalb von unterschiedlichen Regionen 2, innerhalb der Regionen lokalisierten Liegenschaften 3 und innerhalb der Liegenschaften lokalisierten Gebäuden 4 verteilt sind, und die sich mehr oder weniger stark beeinflussen. Besonders kritisch hinsichtlich ihrer Wechselwirkungen sind dabei Funksender, die innerhalb eines Gebäudes, also in enger räumlicher Nähe zu einander, betrieben werden. Unter diesen Bedingungen ist die funktechnische Kollisionsgefahr besonders groß. Ohne Beschränkung der Allgemeinheit wird bei den nachfolgenden Darstellungen von einer Funksender-Gesamtheit ausgegangen, die innerhalb eines Gebäudes oder Gebäudekomplexes vorgegeben ist, wobei die Betreiber der Funksender Mitarbeiter und Beschäftigte in einem Unternehmen sind und also weiteren unternehmensspezifischen Gliederungen und logischen Zuordnungen unterliegen. Es ist klar, dass sich die nachfolgend erläuterten Verfahrensschritte sinngemäß auf die über mehrere Regionen verteilte Gesamtheit der Funksender anwenden lassen.

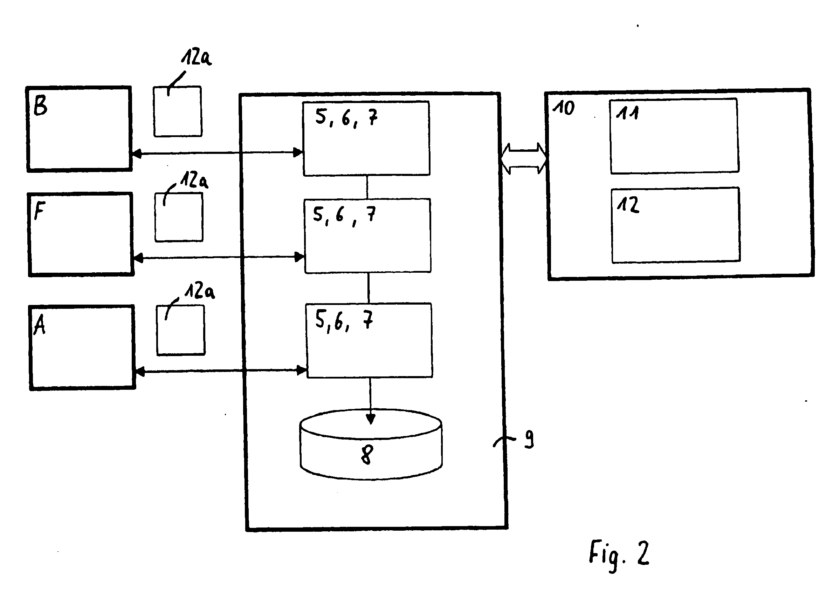

Ein grundsätzliches Blockdiagramm zum Ausführen des Verfahrens zeigt Fig. 2. Die Menge der Anwender der Verfahrensabläufe wird durch mindestens einen Funksenderbetreiber B, mindestens einen Frequenzmanager F und einen Administrator A gebildet.

Der Funksenderbetreiber ist dabei derjenige Anwender, der einen Funksender in einer gegebenen Gesamtheit von Funksendern betreibt und für dessen Betrieb verantwortlich ist. Dies kann beispielsweise ein Besitzer eines in einem Gebäude betriebenen Mobilfunkgerätes, ein Verwalter eines WLAN-Access-Points, eines Funkgerätes, aber auch eines Mikrowellengerätes oder einer RFID-Einrichtung sein. In der Regel ist der Funksenderbetreiber demnach insbesondere jeder Angehörige eines Unternehmens, der in der Unternehmensstruktur irgendeiner Unternehmensabteilung zugeordnet ist, über dessen personenbezogene Daten eindeutig identifiziert werden kann und auf eine beliebige Art und Weise ein funkaktives Gerät in Betrieb nehmen möchte oder betreibt.

Der Frequenzmanager F ist derjenige Anwender, dem die Verwaltung der Gesamtheit der Funksender in einem Gebäude, einer Liegenschaft oder einer Region obliegt. Er ist insbesondere ein Angehöriger eines Unternehmens, bei dem jeder Funksenderbetreiber seinen Funksender muss und der darüber befindet, ob ein gegebener Funksender freigegeben, gesperrt oder stillgelegt wird.

Der Administrator A ist im Rahmen der nachfolgenden Beschreibung der Anwender, dem die übergreifende administrierende Verwaltung des gesamten Verfahrens in allen seinen Komponenten obliegt und der dazu befugt ist, grundlegende Verfahrensparameter zu setzen, nach denen das Verfahren abläuft.

Es ist somit klar, dass zwischen dem Funksenderbetreiber B, dem Frequenzmanager F und dem Administrator A eine hierarchische Struktur mit abgestuften Zugriffs- und Ausführungsrechten besteht. Dabei bildet der Administrator A die oberste Hierarchieebene, der Frequenzmanager F eine mittlere und der Funksenderbetreiber B eine untere Hierarchieebene.

Funksenderbetreiber B, Frequenzmanager F und Administrator A führen entsprechend ihrer Zugriffs- und Ausführungsrechte Freigabeprozeduren 5, Administrationsprozeduren 6 und Sperrprozeduren 7 für jeden Funksender aus, der der Gesamtheit der Funksender zugeordnet ist. Die Resultate dieser Prozeduren bzw. die dafür benötigten Eingabewerte und Variablen liegen in einem Datenbanksystem 8 bereit, werden von dort abgerufen bzw. darin gespeichert. Die Gesamtheit der Prozeduren 5, 6 und 7 in Verbindung mit einem Datenbanksystem 8 bildet somit ein Informations- und Verwaltungssystem 9 für die Funksendergesamtheit, mit dem funktechnische Kollisionen ausgeschlossen werden und das einen allgemeinen und detaillierten Überblick über die vorhandenen Funksender ermöglicht. Wie weiter unten erläutert wird, können die einzelnen Komponenten des Informations- und Verwaltungssystems in Form von modularen Subsystemen ausgebildet sein.

Dem Informations- und Verwaltungssystem 9 ist eine Datenbank mit CAD-Plänen des Gebäudes/Geländes 10 zugeordnet. Diese Datenbank enthält Standortkoordinaten 11, beispielsweise Gebäudenummern, Geschossbezeichnungen oder Raumnummern, aber auch geographische Daten zur genauen Lokalisierung von Orten in einem Gelände, der Liegenschaft oder der Region. Diese Datenbank wird in Abhängigkeit der jeweils gegebenen baulichen Bedingungen der Liegenschaft und der gegebenen CAD-Pläne erstellt. Auf der Basis der Standortkoordinaten ist zusammen mit weiteren verwaltungstechnischen, funktionstechnischen oder sonstigen Daten und Informationen ein Standortschema 12 aufgebaut, das einen räumlichen und logistischen Überblick über die Regionen, Liegenschaften und Gebäude ermöglicht.

Die Informationen der CAD-Datenbank 10 werden von dem Informations-und Verwaltungssystem 9 abgerufen und ermöglichen somit eine einfache sowohl räumliche als auch organisatorische Lokalisierung des Funksenders. Dabei werden, wie weiter unten dargestellt wird, graphische interaktive Anzeigen 12a, insbesondere skalierbare Vektorgraphiken, an die Anwender B, F und A ausgegeben, die eine einfache graphische Anzeige und Auswahl eines Funksenderstandorts ermöglichen.

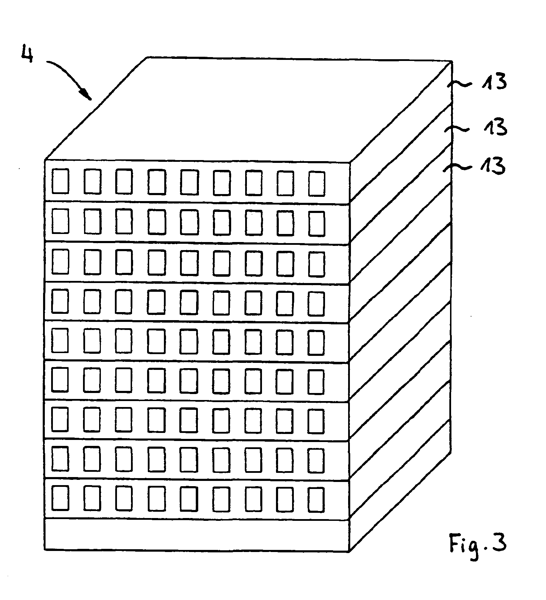

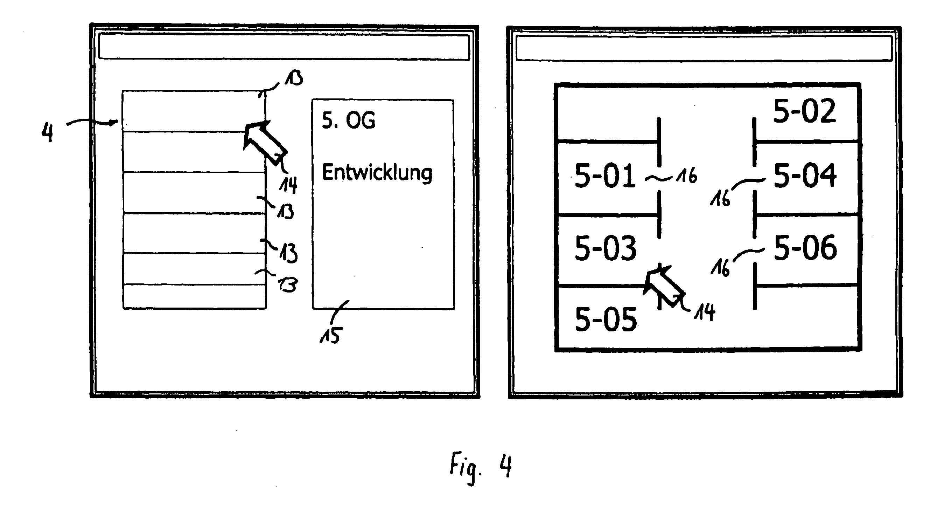

Ein Beispiel für eine derartige graphische Ausgabe ist in den Figuren 3 und 4 gezeigt. Das Gebäude 4 in Fig. 3 enthält eine Reihe von Geschossen 13, die in einer üblichen Weise durchnummeriert sind. Das Gebäude selbst kann mit einer eindeutigen Indizierung versehen sein. Die Gebäudeindizierung und die Geschossnummerierung sind als Standortkoordinaten in der CAD-Datenbank gespeichert. Zusammen mit logistischen Zuordnungen zu dem Gebäude oder seinen einzelnen Geschossen, beispielsweise Abteilungsbezeichnungen, wird dadurch das Standortschema des Gebäudes gebildet. Dieses Standortschema wird in einer graphische Ausgabe umgesetzt und den jeweiligen Benutzern angezeigt.

Derartige optional realisierbare interaktive Anzeige- und Auswahlmittel werden auf der Ebene von Datenbankoperationen als so genannte "Views" ausgeführt. Das Informations- und Verwaltungssystem greift dabei auf die Datenbank mit geographischen Informationen zu den Liegenschaften oder Gebäuden zu, ruft die entsprechenden Daten ab und bindet sie in die eigenen Prozeduren ein, bzw. stellt sie insbesondere dar.

Fig. 4 verdeutlicht dies. Im linken Teil der Figur ist das Gebäude 4 stilisiert dargestellt. Die einzelnen Stockwerke 13 erscheinen als schematische Querbalken. Diese können interaktiv mit einem Mauszeiger 14 angewählt und angeklickt werden. Eine Textbox 15 gibt die Geschossnummer, in diesem Beispiel "5. OG" und einen Namen der Abteilung, in diesem Beispiel "Entwicklung" aus. Im rechten Teil der Figur ist ein schematischer Grundriss des gewählten Geschosses gezeigt. Eine Reihe von Räumen 16 mit Raumnummern kann mittels des Mauszeigers angewählt werden. Auf der Grundlage dieser durch die CAD-Datenbank bereitgestellten Daten lassen sich nunmehr Standorte von vorhandenen oder neu hinzuzufügenden Funksendern leicht auswählen und bearbeiten. Die CAD-Datenbank stellt dabei die Daten für das räumliche "Gerüst" der Funksenderdaten bereit, das Informations- und Verwaltungssystem 9 verwaltet alle weiteren die Funksender betreffenden Daten.

Programmtechnisch ist eine derartige graphische Darstellung mit Hilfe einschlägig bekannter Programmiersprachen und Browser-Programme, zum Beispiel unter Verwendung eines Webbrowsers wie InternetExplorer (R), Mozilla (R) und dergleichen Programme mit der Möglichkeit zum Ausführen von Java-Appletts realisierbar. Gewisse Zoom-Funktionen lassen sich durch ein entsprechendes Graphik-Format, beispielsweise als skalierbare Vektorgraphik (SVG) realisieren. Ebenso kann dies durch Animationen, beispielsweise mittels Flashplayer-Komponenten, unterstützt werden.

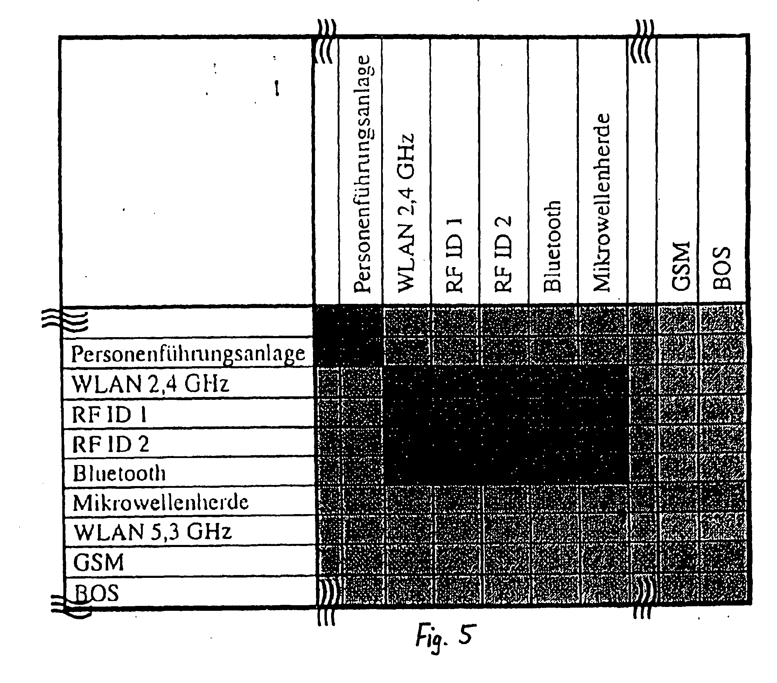

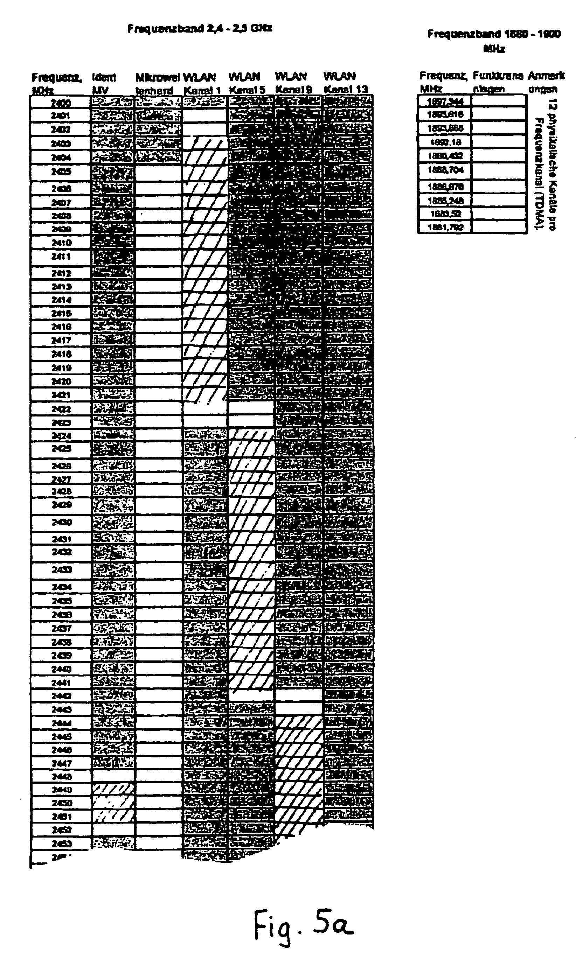

Fig. 5 zeigt eine beispielsweise tabellarische Darstellung von Kollisionsrisiken verschiedener Funksenderarten, die innerhalb des Informations- und Verwaltungssystems abgespeichert sind und als Grundlage für eine Kollisionsbewertung jedes einzelnen Funksenders dienen. Die Tabelle gibt dabei an, von welchen Funksysteme innerhalb eines gegebenen Abstandes oder Raumbereiches Kollisionen zu erwarten sind. Es können prinzipiell mehrere solcher Schemata vorgegeben sein, die sich auf unterschiedliche Abstände, Raumbereiche oder Distanzen beziehen. Die einzelnen Zuordnungen in der Tabelle sind dabei entweder bekannt oder empirisch ermittelt. Sie bilden eine in der Datenbank abgelegte Datenmenge, anhand welcher für jeden Funksender ein individuelles Kollisionsrisiko abgeschätzt werden kann. Die Codierung des Kollisionsrisikos innerhalb dieser Zuordnung kann dabei durch Variablen erfolgen, denen ein numerischer Risikowert beigelegt wird. Die Zuordnungen sind dabei prinzipiell frei änderbar und editierbar.

Eine spezifische Zuordnungstabelle kann zum Beispiel das Kollisionsrisiko innerhalb eines durchschnittlichen Büroraumes, eine zweite Zuordnung das innerhalb eines Geschosses herrschende Risiko usw. beschreiben. Bei dem hier gezeigten Beispiel sind zum Beispiel RFID-Anwendungen in Kombination mit WLAN-Funksystemen im Bereich von 2,4 bis 2,5 GHz, Bluetooth-Systemen und Mikrowellenherden mit einem besonders hohen Kollisionsrisiko behaftet.

Sofern also in einem Bürobereich eines bestimmten Raumes in einem bestimmten Geschoss bereits ein Access-Point für WLAN installiert und im Informations- und Verwaltungssystem verzeichnet ist, und in dem gleichen Raum ein Mikrowellenherd aufgestellt werden soll, ruft das Informations- und Verwaltungssystem die Zuordnungstabelle für Büroräume auf und fragt die Zuordnung hinsichtlich des Risikocodes zwischen WLAN und Mikrowellenherd ab. Als Resultat dieser Abfrage wird dem Frequenzmanager F umgehend signalisiert, dass in diesem Falle eine kritische Wechselwirkung der beiden Funksysteme zu erwarten ist. Der Frequenzmanager wird in diesem Fall das Aufstellen eines Mikrowellenherdes untersagen oder weitergehende Prüfungen einleiten.

Dagegen zeigt die Tabelle aus Fig. 5, dass das Betreiben eines GSM-Systems in diesem Bereich parallel zum WLAN unkritisch ist. Mobiltelefone können also in dem betreffenden Bereich parallel zum WLAN betrieben werden und werden durch den Frequenzmanager aufgrund dieser Angaben voraussichtlich auch gestattet. Das Informationssystem wird also aus der Zuordnung einen niedrigen Risikocode ermitteln und dies in entsprechender Weise ausgeben.

Fig. 5a zeigt eine weitere Visualisierung in Form eines hier ausschnittsweise dargestellten Frequenzstrahls bzw. Belegungsspektrums. Das Belegungsspektrum zeigt in der linken Spalte eine Reihe von Funkfrequenzen in Gigahertz in einem ausgewählten Frequenzband, in diesem Fall von 2,4 bis 2,5 GHz. Die rechten Tabellenspalten zeigen eine Reihe von Funkanwendungen und die durch sie belegten Funkfrequenzen. Freie Bandbereiche sind in dieser Darstellung dunkel eingefärbt, eine geringe Beanspruchung zeigt sich durch eine helle Kennzeichnung der entsprechenden Zellen in der Tabelle, eine intensive Nutzung durch eine Schraffur. So beansprucht beispielsweise ein Mikrowellenherd fast das gesamte Frequenzband von 2,4 bis 2,5 GHz, während die WLAN-Kanäle 1, 5 und 9 zueinander gestaffelte Bandbereiche besetzen und teilweise intensiv nutzen. Es ist offensichtlich so, dass unter bestimmten Bedingungen, insbesondere durch eine enge räumliche Nachbarschaft der beteiligten Geräte, eine nachteilige Beeinflussung der WLAN-Kanäle durch den Mikrowellenherd nicht auszuschließen ist. Besondere Beachtung ist offensichtlich auch der Funkanwendung "Ident MV" beizumessen. Hier handelt es sich um eine drahtlose Identifizierung, die offensichtlich die Frequenzen zwischen 2449 und 2451 MHz intensiv nutzt und mit dem WLAN-Kanal 9 sehr wahrscheinlich kollidiert.

Eine derartige Darstellung kann auch weitere Informationen über die Art der Funksender und ihre Standorte enthalten oder diesen Informationen zugeordnet sein. Zweckmäßigerweise beschreibt diese Darstellung Frequenzüberschneidungen und Funksenderkollisionen innerhalb eines Bereiches, insbesondere eines Gebäudes, einer Ebene, Etage usw. Das Informationssystem kann dazu für jede derartige Örtlichkeit eine solche Übersicht erzeugen.

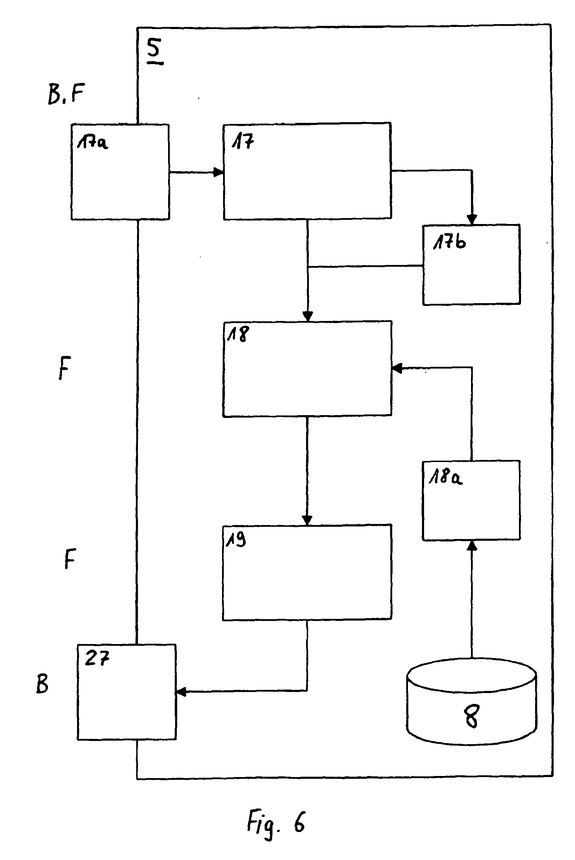

Neu hinzuzufügende Funksender werden im Rahmen des Informations- und Verwaltungssystems durch die Freigabe-Prozedur 5 behandelt. Ein erster Abschnitt der Freigabe-Prozedur ist in Fig. 6 gezeigt. Dieser umfasst eine Antragsprozedur 17, bei der eine anmeldende Eingabe von Funksender-Daten 17a erfolgt. Die Antragsprozedur enthält weiterhin eine Antragsbearbeitungsprozedur 17b zum nachträglichen Editieren von Daten auf einer gleichen oder höheren Zugriffshierarchie. Diese Daten werden einer Antragsbewertungsprozedur 18 zugeführt, bei der gespeicherte Funksender-Daten 18a aus dem Datenbanksystem 8 abgerufen werden. Eine Antragsentscheidungsprozedur 19 entscheidet dann über die Behandlung des Antrags. Die Prozeduren 18 und 19 laufen dabei auf einer höheren Hierarchieebene ab. Das heißt, dass die Antragsprozedur 17 vom Funksenderbetreiber B oder dem Frequenzmanager initiiert werden kann, während die Ausführung der Antragsbewertungsprozedur 18 und der Antragsentscheidungsprozedur 19 dem Frequenzmanager F vorbehalten ist. Unkontrollierte und unberechtigte Anmeldungen und Installationen von Funksendern werden dadurch vermieden.

Die Funksender-Daten 17a umfassen dabei Angaben zur Hardware, dem vorgesehenen Ort des Funksenders, dem Verantwortlichen, der Art der Funkstrahlung und sonstige Bemerkungen. Die Auswahl des Ortes kann wie beschrieben graphisch erfolgen. Nach Abspeichern des Antrags wird diesem ein Statusvermerk zugewiesen. In Verbindung damit wird ein Identifikationsschlüssel zur eindeutigen Identifizierung des Funksenders und dessen Betreibers vergeben. Die Bearbeitung des Antrags wird dem Funksender-Betreiber in Form einer versandten E-Mail quittiert. Die eingegebenen Daten 17a werden in der Datenbank 8 abgelegt. Es wird außerdem eine verfolgbare History über nachfolgende Datenveränderungen erzeugt.

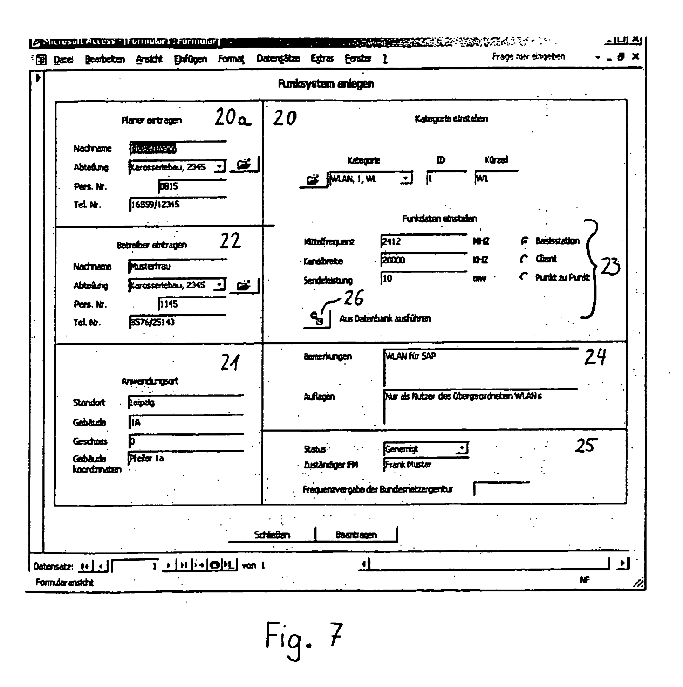

Fig. 7 zeigt ein beispielhaftes Dialogfelder zum Eingeben der Funksenderdaten. Es sind Eingabemöglichkeiten für Kategorien, Anwendungsorte, Betreiber und dergleichen, insbesondere Eingabemasken 20 über Hardware- und sonstige technische Angaben, Eingabemasken 20a für einen Planer des Funksystems, Eingabemasken 21 über Anwendungs- und Standorte, Eingabemasken 22 über personenbezogene Daten des Funksenderbetreibers und Eingabemasken 23 über physikalisch-technische Parameter der Funkstrahlung vorhanden. Außerdem ist ein Textfeld 24 für Bemerkungen und Auflagen und ein Statusfeld 25 zum Anzeigen des Status der Anmeldung zusammen mit einem zuständigen Funksendermanager vorhanden. Mittels eines Knopfes 26 können in einer Datenbank vorab vorhandene Funksystemdaten eingelesen werden.

Die unterschiedliche Hierarchie zwischen Funksenderbetreiber B und Frequenzmanager F kann bei dem Dialogfeld dadurch realisiert werden, indem einige Angaben bzw. Knöpfe für den Funksenderbetreiber deaktiviert sind.

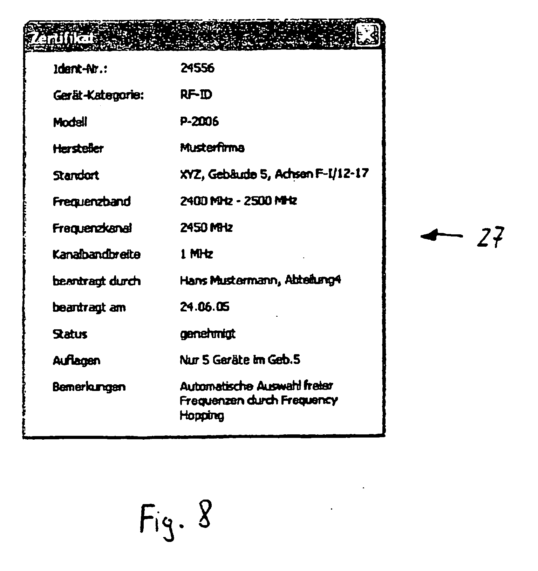

Die Antragsbearbeitungs-Prozedur 17a aus Fig. 6 greift prinzipiell auf die Dialogfelder aus Fig. 7 und 8 zurück. Sie kann jederzeit durch eine Benutzerinteraktion, beispielsweise durch den Funksenderbetreiber B oder den Frequenzmanager F gestartet werden. Das Aufrufen und Ändern der Funksenderdaten wird in der History protokolliert. Dabei erfolgt eine Identifikation über den vergebenen Schlüssel und eine Anzeige der Daten mit der Möglichkeit zur Editierung. Der beantragende Funksenderbetreiber B darf dabei außer dem Antragstatus prinzipiell alle Daten ändern. Der Frequenzmanager F darf darüber hinaus auch den Status des Antrags ändern, er kann den Antrag genehmigen oder aufgrund der ermittelten Kritikalitäten ablehnen. Der Funksenderbetreiber B enthält im Ergebnis der Entscheidung eine Nachricht, insbesondere über E-Mail.

Innerhalb der Funksender-Datenbank ist jeder erfasste Funksender in Form eines Datensatzes gespeichert. Zusätzlich zu den von den Funksenderbetreibern eingegebenen Daten werden auch topographische Daten des Funksenders sowie technische, dem Betreiber des Funksenders nicht unmittelbar bekannte Daten vorgehalten. Dies sind insbesondere absolute Höhen- oder andere Positionsdaten, die sich aus der CAD-Datenbank ableiten lassen, oder technische Analyseparameter, die sich aus der Art des Funksenders ergeben und die sich aus technischen Spezifikationen des Funksenders ergeben. Dies sind insbesondere die Anzahl möglicher Frequenzen des Funksenders, Frequenzbänder und eine oder mehrere Mittenfrequenzen, Kanalbandbreiten, Leistungen, Antennentypen, Antennengewinne, Hauptstrahlrichtungen, Zuleitungsverluste und dergleichen technische Parameter mehr.

Die Eingabe derartiger Parameter kann durch eine Vorgabe eines Standardwertes erleichtert werden.

Zudem ist die Ausgabe eines Funksender-Zertifikates 27 vorgesehen. Fig. 8 zeigt ein beispielhaftes Funksender-Zertifikat 27. Das Zertifikat enthält eine Funksender-Identifikationsnummer, eine Herstellerangabe des Funksenders, das Modell des Funksenders, den vorgesehenen Standort des Funksenders entsprechend der Standortkoordinaten, die Sendefrequenz und den Namen des Funksenderbetreibers B. Außerdem sind ein Genehmigungs-Status, besondere Auflagen und weitere Bemerkungen zum Betrieb des Funksenders auf dem Zertifikat angegeben. Das Funksender-Zertifikat kann darüber hinaus als ein Klebeetikett oder eine Plakette ausgebildet sein, die an das Gehäuse des Funksenders aufgeklebt wird und somit den Funksender zertifizieren.

Eine höchste Verfahrenshierarchie wird durch den Administrator A betrieben. Der Administrator kann grundsätzlich jeden der vorhergehend genannten Verfahrensschritte ausführen. Zudem obliegt ihm das grundlegende Verwalten von Stammdaten, Kategorien und das Setzen grundlegender Verfahrensparameter.

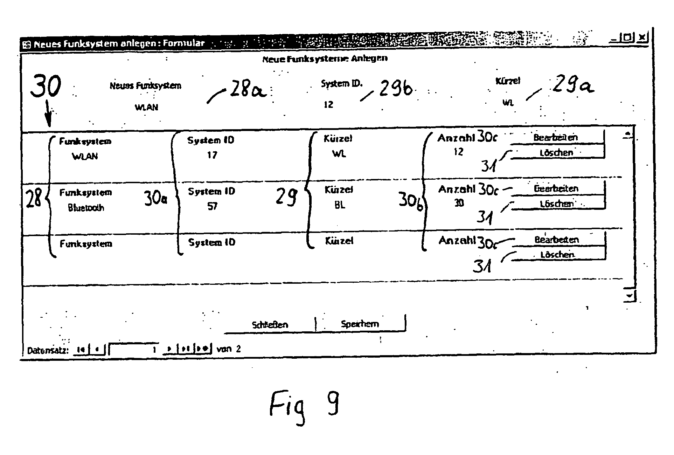

Das Verwalten der Kategorien umfasst insbesondere das Setzen oder Streichen prinzipiell zugelassener Funksenderarten. Fig. 9 zeigt ein beispielhaftes Dialogfeld zum Verwalten der Kategorien. Das Dialogfeld zeigt eine Tabelle 30, in der die Funksysteme 28, zugewiesene Kürzel 29 und vorhandene Verwendungshäufigkeiten 30b zusammen mit Identifikationen 30a aufgeschlüsselt sind. Der Administrator A gibt zum Anlegen bzw. Freigeben eines Funksystems die entsprechende Senderkategorie und ein entsprechendes Kürzel mit einer Identifikationszahl in Eingabefelder 28a und 29a bzw. 29b ein oder löscht diese. Dadurch ist es möglich, die mögliche Vielfalt der Funksender in der Gesamtheit hinreichend eng und einfach zu halten und nur bei Bedarf zusätzliche Funksenderarten zusätzlich zuzulassen. Bei dem hier gezeigten Beispiel wird zum Beispiel die Kategorie "WLAN" mit dem Kürzel "WL" und der Identifikationszahl "12" versehen. Außerdem ist eine tabellarische Liste 30 über die jeweils vorliegenden Funksender gegeben. Durch ein Anklicken eines Löschknopfes 31 können Funksenderkategorien aus den Datenbankstrukturen gelöscht werden. Ein Editieren der aufgeschlüsselten Daten ist über ein Anklicken eines Bearbeitungsknopfes 30c möglich.

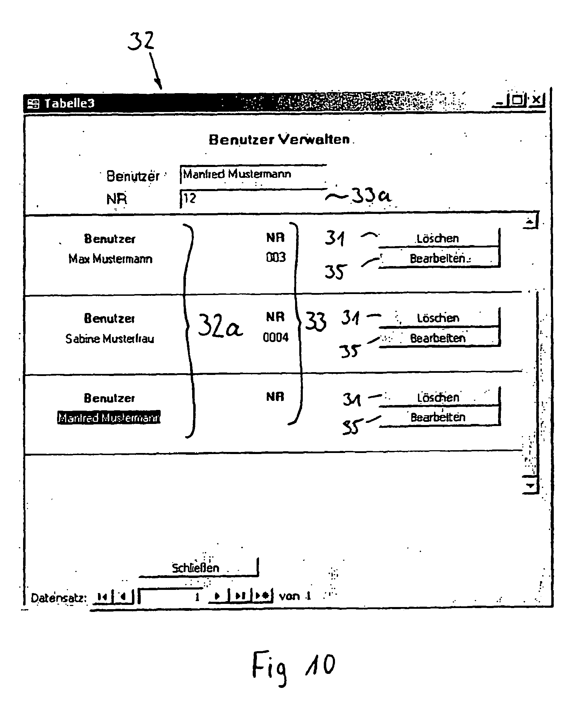

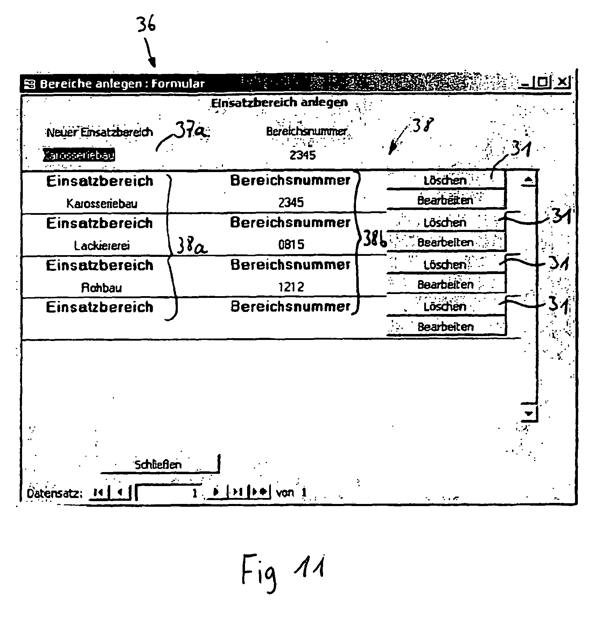

Die Figuren 10 und 11 zeigen Beispiele für Dialogfelder für eine Benutzeradministration 32 bzw. eine Administration 36 verschiedener Unternehmensbereiche. Zur Benutzeradministration wird eine personenbezogene Kennziffer, insbesondere die Identifikationsnummer aus der Antragsprozedur 17 in ein Eingabefeld 33a eingegeben oder eine Liste von Benutzern bzw- Funksenderbetreibern erstellt. Diese enthält in einer Spalte 32a Benutzemamen, in einer Spalte 33 Identifikationsnummern, in einer weiteren Spalte 34 personenbezogene Daten, insbesondere Name und Vorname, einen jeweils zugeordneten Knopf 35 zum Bearbeiten der Betreiberdaten bzw. zu deren Löschen 31.

Das Dialogfeld 36 aus Fig. 11 ist ähnlich aufgebaut. Hier können Unternehmensbereiche 37 vorab gewählt oder in einer Eingabemaske 37a aufgerufen bzw. eingegeben werden. Eine Tabelle 38 umfasst eine Spalte 38a über Einsatzbereiche und eine Spalte 38b über Bereichsnummern. Bereiche ohne erlaubte bzw. vorhandene Funksender können aus der Liste gelöscht werden. Dies erfolgt durch ein Setzen von Löschmarkem oder einem Anklicken des Löschknopfes 31.

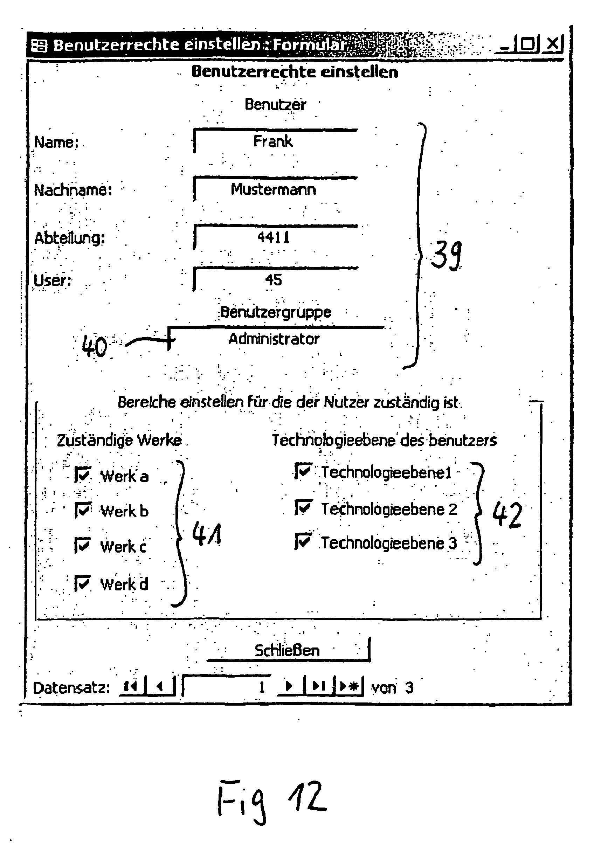

Fig. 12 zeigt ein beispielhaftes Dialogfeld für eine Benutzerverwaltung, insbesondere zum Vergeben von Benutzerrechten. Es enthält Auflistungen bzw. Eingabemasken über personenbezogene Daten 39, ein Auswahlmenü 40 zum Vergeben einer Funktion in der Systemhierarchie, Checkboxen 41 über dessen Beschäftigungsstandort und Checkboxen 42 über den Unternehmensbereich, in dem er tätig oder in dem er für ein Funksystem zuständig ist.

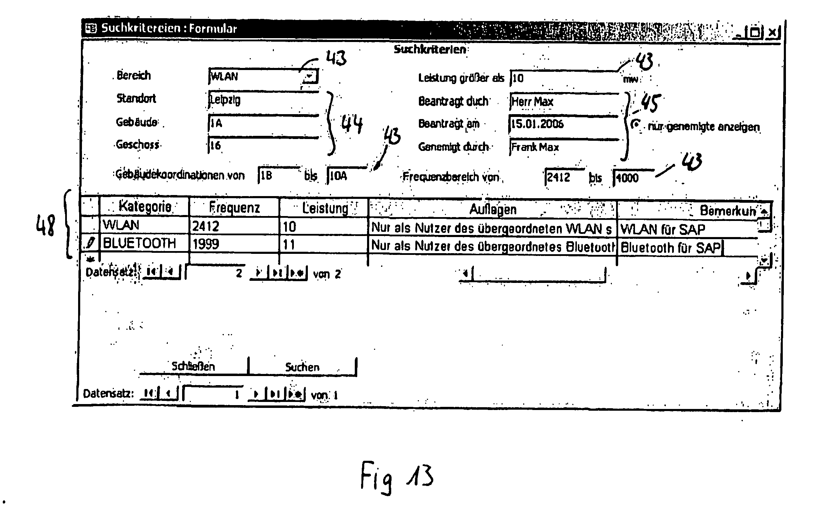

Außerdem sind Suchfunktionen vorgesehen. Die Figur 13 zeigt ein beispielhaftes Fenster zum Setzen von Suchfiltern und -kriterien und zum Anzeigen von Suchergebnissen. Die Dialogbox weist Eingabemasken 43 zur Spezifizierung eines Suchfilters entlang technischer Parameter der gesuchten Funksender auf. Dies betrifft insbesondere eine Auswahl bzw. Eingabe der Funksenderleistung, der Frequenzbereiche oder der Standorte. Zusätzliche Parameter können auch die Kanalbreite, die FM- oder AM-Modulation, eine Funktionsreichweite und eine Störreichweite des Funksenders sein.

Eine Eingabemaske 44 setzt einen Filter für umgebungsspezifische Suchparameter, insbesondere Liegenschaftsbereiche, Gebäudekomplexe, Geschossadressierungen, Raumnummern oder Achsnummern. Außerdem ermöglicht die Eingabemaske 44 eine hier nicht gezeigte Wahl zwischen stationären und mobilen Funksendern. Die Eingabemaske 45 setzt einen Filter bezüglich des Status der zu suchenden Funksender (beantragt, genehmigt, abgelehnt usw.) insbesondere in Verbindung mit autorisierenden Personen, Genehmigungsterminen oder Änderungszeitpunkten.

Schließlich lassen sich mit Hilfe hier nicht gezeigter Auswahlmenüs tabellarische bzw. graphische Anzeige- und Auswertungsparameter setzen. Der Administrator kann sich somit die Suchergebnisse tabellarisch oder graphisch, insbesondere in Verbindung mit den Daten der CAD-Datenbank anzeigen lassen.

In der Dialogbox erscheint außerdem eine tabellarische Auflistung 48. Diese weist in einer Spalte die Kategorie des jeweiligen Funksenders, dessen Frequenz, Leistung, jeweils geltende Auflagen und zusätzliche Bemerkungen auf. Die Auflistung ist so ausgebildet, dass die dort enthaltenden Daten editiert bzw. ausgewählt werden können.

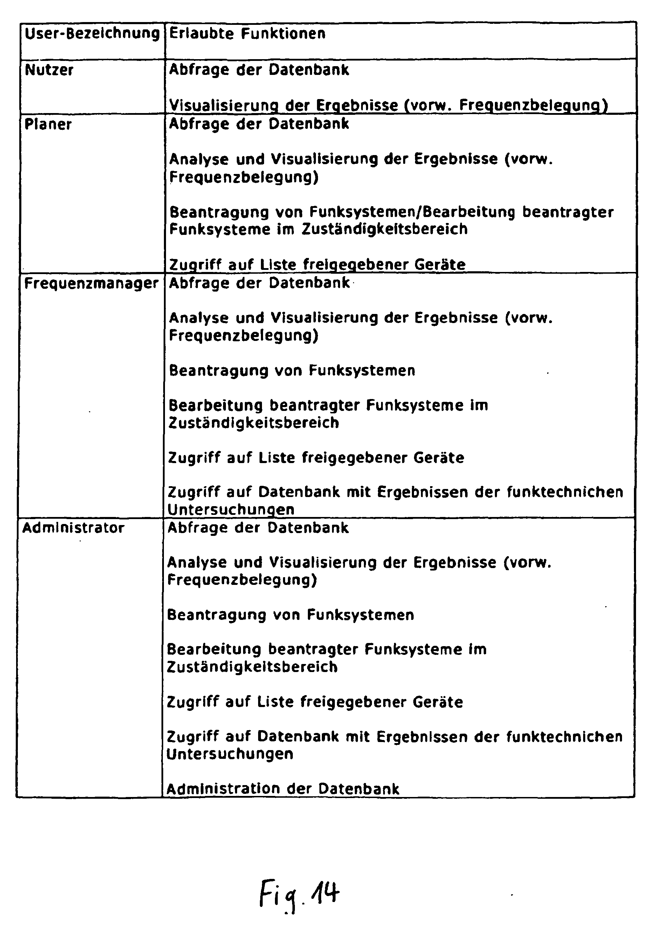

Fig. 14 zeigt eine beispielhafte tabellarische Darstellung über die Verteilung von Zugriffsrechten. Bei diesem Beispiel ist Nutzer, ein Planer, der erwähnte Frequenzmanager und der Administrator vorgesehen. Wie aus der Tabelle ersichtlich ist, nimmt der Umfang der erlaubten Zugriffsrechte bei höherer Hierarchie von dem Nutzer zum Administrator zu.

Dem Nutzer ist eine Abfrage der Datenbank und eine Visualisierung der Ergebnisse dieser Abfragefunktion, insbesondere der Frequenzbelegung, möglich. Dieser Umfang der Zugriffsrechte entspricht im wesentlichen einem reinen Informationszugang.

Dem Planer stehen zusätzlich dazu noch Rechte zum Ausführen von Funktionen zur Beantragung von Funksendern und Funksystemen, zur Antragsbearbeitung in seinem Zuständigkeitsbereich und Zugriffe auf eine Liste freigegebener Geräte zur Verfügung.

Der Frequenzmanager verfügt zusätzlich über Freigaberechte für Funksysteme in seinem Zuständigkeitsbereich und über Zugriffsrechte auf die Datenbank mit Ergebnissen funktechnischer Untersuchungen.

Dem Administrator wiederum stehen grundsätzliche Zugriffsrechte in vollem Umfang zur Verfügung. Insbesondere wird ihm die Administration der Datenbank ermöglicht.

Das Verfahren, grundlegende Verfahrensabläufe und Komponenten zum Ausführen des Verfahrens wurden anhand der Ausführungsbeispiele erläutert. Weitere Ausführungsformen ergeben sich aus den Unteransprüchen. Im Rahmen fachmännischen Handelns können zweckmäßige bzw. vorteilhafte Ausgestaltungen vorgenommen werden, ohne den Bereich des erfindungsgemäßen Grundgedankens zu verlassen.

Bezugszeichenliste

1 Funksender

2 Region

3 Liegenschaft

4 Gebäude

5 Freigabeprozedur

6 Administrationsprozedur

7 Sperrprozedur

8 Datenbank

9 Informations- und Verwaltungssystem

10 CAD-Datenbank für Gebäude/Geländepläne

11 Standortkoordinaten

12 Standortschema

12a graphische Anzeige

13 Geschoss

14 Mauszeiger

15 Textbox

16 Raum

17 Antragsprozedur

17a Funksender-Daten

17b Antragsbearbeitungs-Prozedur

18 Antragsbewertungs-Prozedur

19 Antragsentscheidungs-Prozedur

20 Eingabemaske für Hardwaredaten

20a Eingabemaske für Planer

21 Eingabemaske für Standorte

22 Eingabemaske für personenbezogene Daten

23 Eingabemaske über physikalisch-technische Parameter

24 Textfeld für Bemerkungen

25 Statusfeld

26 Datenbankzugriff

27 Funksender-Zertifikat

28 Funksystem

29 Eingabefeld Funksystemkürzel

29a Eingabefeld Funksystem

29b Eingabefeld Identifikationszahl

30 Tabelle

30a Identifikation

30b Verwendungshäufigkeit

30c Bearbeitungsknopf

31 Löschknopf

32 Benutzerverwaltung

32a Benutzername

33 Identifikationsnummern-Spalte

33a Suchfeld für Identifikationsnummer

34 Spalte für personenbezogene Daten

35 Aufruf zum Bearbeiten von Betreiberdaten

36 Administration Unternehmensbereich

37 Untemehmensbereiche

38 Tabelle

38a Einsatzbereich

38b Bereichsnummern

39 Personendaten

40 Auswahlmenü

41 Checkboxen Standorte

42 Checkboxen Unternehmensbereich

43 Eingabemaske für technikspezifische Suchfilter

44 Eingabemaske für umgebungsspezifische Suchfilter

45 Eingabemaske für statusspezifische Suchfilter

46 Auswahlmenü für tabellarische Anzeigeparameter

47 Auswahlmenü für graphische Anzeigeparameter

48 tabellarische Auflistung

## Patentansprüche

1. Verfahren zum Ausschließen funktechnischer Kollisionen sich in ihren Bandbereichen teilweise beeinflussender, innerhalb einer Region betriebener Funkfrequenz-Systeme mit einer Gesamtheit von Funksendern,
wobei ein
Erfassen der zur Gesamtheit gehörenden Funksender (1) mit einem messtechnischen Überprüfen auf mögliche gegenseitige Beeinflussungen der zur Gesamtheit gehörenden Funksender und eine Datenspeicherung der Gesamtheit der Funksender mit einer Datenerfassung und Speicherung von Funksender-Daten (17a) in einer Funksender-Datenbank (8), erfolgt
**gekennzeichnet durch**
Registrieren einer Menge von Risikograden über erfasste negative gegenseitige Beeinflussungen der Funksender innerhalb der Gesamtheit und Zuordnung der Menge der Risikograde zur Gesamtheit der Funksender,
Analysieren der in der Datenbank gespeicherten Funksender-Daten auf gegenseitige Kollisionswahrscheinlichkeiten unter Zugriff auf die erfassten Risikograde und
Ausführen von Freigabe-, Administrations- und Sperrprozeduren (5, 6, 7) für jeden Funksender auf der Grundlage der funksenderspezifischen Kollisionswahrscheinlichkeit.

2. Verfahren nach Anspruch 1,
**dadurch gekennzeichnet, dass**
das Erfassen und messtechnische Überprüfen der Funksender ein Erfassen räumlicher Funksender-Standortdaten, technischer Funksender-Betriebsdaten und Funksender-Betreiberdaten in einem Informationssystem (9) zur Funksenderverwaltung umfasst.

3. Verfahren nach Anspruch 1 und 2,
**dadurch gekennzeichnet, dass**
in Kombination mit dem Erfassen der räumlichen Funksender-Standortdaten eine Einordnung der Funksender-Standortdaten in ein zwei- oder dreidimensionales Standortschema (12) unter Zugriff auf eine Reihe von Standortkoordinaten (11) in Form von Gebäude/Geländeplänen aus einer CAD-Datenbank (10) eines Gebäudes und/oder einem Gelände ausgeführt wird.

4. Verfahren nach Anspruch 1 bis 3,
**dadurch gekennzeichnet, dass**
das Erfassen der Funksender-Betriebsdaten mindestens ein Erfassen und Messen technisch relevanter funktechnischer Daten und das Erfassen der Funksender-Betreiberdaten ein Erfassen personenbezogener Daten beinhaltet.

5. Verfahren nach Anspruch 1 bis 4,
**dadurch gekennzeichnet, dass**
das Ausführen der Freigabe-Prozedur (5) eine Antragsprozedur (17) mit einer anmeldenden Eingabe der Funksender-Daten (17a) auf einer ersten Verfahrenhierarchie, eine Antragsbewertungsprozedur (18) mit einer Bewertung der angemeldeten Funksender-Daten unter Zugriff auf gespeicherte Funksender-Daten (18a) auf einer höheren Verfahrenshierarchie und eine Antragsentscheidungsprozedur (19) mit einem Entscheid über eine Übernahme der Funksender-Daten in die Funksender-Datenbank (8) auf der höheren Verfahrenshierarchie umfasst.

6. Verfahren nach Anspruch 5,
**dadurch gekennzeichnet, dass**
bei dem Ausführen der Antragsprozedur (17), der Antragsbewertungsprozedur (18) und der Antragsentscheidungsprozedur (19) eine Lokalisierung eines beantragten Funksender-Standorts durch eine Angabe von Gelände-/ Gebäudekoordinaten oder durch ein interaktives Eintragen in das zwei- oder dreidimensionale Standortschema.

7. Verfahren nach Anspruch 6,
**dadurch gekennzeichnet, dass**
bei dem Aufruf des Standortschemas (12) ein Anzeigen einer interaktiven Grafik erfolgt, wobei die Standortkoordinate (11) in der interaktiven Grafik in eine topographische Darstellung, eingefügt wird.

8. Verfahren nach Anspruch 1 bis 7,
**dadurch gekennzeichnet, dass**
die Antragsprozedur (17) eine Antragsbearbeitungs-Prozedur (17b) mit einer Änderungsmöglichkeit der eingegebenen Funksender-Daten (17a) auf einer gleichen und/oder höheren Verfahrenshierarchie umfasst.

9. Verfahren nach Anspruch 1 bis 5,
**dadurch gekennzeichnet, dass**
die Antragsentscheidungsprozedur (19) eine Ausgabe einer Freigabekennzeichnungfür eine offizielle Betriebsfreigabe des Funksenders umfasst.

10. Verfahren nach Anspruch 1,
**dadurch gekennzeichnet, dass**
das Verwalten der Gesamtheit der Funksender ein administratives Verwalten von Datensatzstrukturen der Funksender-Daten, insbesondere von Funksender-Kategorien (28), Standort-Kategorien (36), Betreiber-Kategorien und personenbezogenen Betreiberdaten (33, 34) auf einer höchsten Verfahrenshierarchie umfasst.

11. Verfahren nach Anspruch 10,
**dadurch gekennzeichnet, dass**
das Verwalten der Funksender-Kategorien ein Hinzufügen, Ändern und/oder Löschen einer Funkfrequenz-System-Kategorie umfasst.

12. Verfahren nach Anspruch 10,
**dadurch gekennzeichnet, dass**
das Verwalten der Standortkategorien ein Hinzufügen, Ändern und/oder Sperren reeller räumlicher Gebiete und logisch beschriebener Bereiche umfasst.

13. Verfahren nach Anspruch 10,
**dadurch gekennzeichnet, dass**
das Verwalten der Betreiber-Kategorien und Betreiberdaten ein Hinzufügen, Ändern und/oder Sperren von organisationstechnischen, logistischen oder personenbezogenen Einzeldaten umfasst.

14. Verfahren nach Anspruch 1 bis 13,
**dadurch gekennzeichnet, dass**
das Verwalten der Gesamtheit der Funksender Auswertungs- und Suchprozeduren mit frei definierbaren Suchfiltern und Anzeigemodi sowie Vorhersageprozeduren zum Ermitteln einer Wirkungsprognose eines neu einzuführenden Funksenders umfasst.

15. Verfahren nach einem der vorhergehenden Ansprüche,
**dadurch gekennzeichnet, dass**
eine Visualisierung der Gesamtheit der Funksender vorgesehen ist, wobei die Standorte der Funksender in ihrer topographischen Lage angezeigt werden.

16. Verfahren nach einem der vorhergehenden Ansprüche,
**dadurch gekennzeichnet, dass**
bei der Speicherung von Ergebnissen messtechnischer Untersuchungen bzw. Freigabemessungen eine Verknüpfung zu einer Datenbank und/oder zu einem Verzeichnis mit darin gespeicherten Ergebnissen hergestellt wird.

17. Verfahren nach einem der vorhergehenden Ansprüche,
**dadurch gekennzeichnet, dass**
ein Kollisionspotenzial zwischen verschiedenen Funksystemen in Form einer Kompatibilitätsmatrix gespeichert ist, wobei Funksysteme mit einem hohen Kollisionspotenzial in geeigneter und auffallender Form angezeigt werden.

18. Verfahren nach einem der vorhergehenden Anspruche,
**dadurch gekennzeichnet, dass**
eine Frequenzbelegung im Gebäude bzw. auf dem Gelände durch ein Anzeigen eines Frequenzstrahls, d.h. eines stilisierten Spektrums mit einzelnen registrierten Anwendungen, angezeigt wird.

## Claims

1. Method for precluding radio collisions of radio-frequency systems that are operated within a region, that partly influence one another in their band ranges and comprise a totality of radio transmitters,
wherein the radio transmitters (1) belonging to the totality are detected with a measurement check for possible mutual interferences of the radio transmitters belonging to the totality, and data of the totality of radio transmitters are stored by a data acquisition and storage of radio transmitter data (17a) in a radio transmitter database (8),
**characterized by**
registering a set of degrees of risk regarding detected negative mutual interferences of the radio transmitters within the totality and assigning the set of degrees of risk to the totality of radio transmitters,
analyzing the radio transmitter data stored in the database with regard to mutual collision probabilities with access to the detected degrees of risk, and
executing enabling, administration and blocking procedures (5, 6, 7) for each radio transmitter on the basis of the radio-transmitter-specific collision probability.

2. Method according to claim 1,
**characterized in that**
the detection and measurement check of the radio transmitters comprise a detection of spatial radio transmitter location data, technical radio transmitter operating data and radio transmitter operator data in an information system (9) for the management of the radio transmitters.

3. Method according to claim 1 and 2,
**characterized in that**
in combination with the detection of the spatial radio transmitter location data the radio transmitter location data are arranged in a two- or three-dimensional location scheme (12) with access to a number of location coordinates (11) in form of building plans/terrain layouts from a CAD database (10) of a building and/or a terrain.

4. Method according to claim 1 to 3,
**characterized in that**
the detection of the radio transmitter operating data comprises at least a detection and measurement of technically relevant radio data and the detection of the radio transmitter operator data comprises a detection of person-related data.

5. Method according to claim 1 to 4,
**characterized in that**
the execution of the enable procedure (5) comprises a request procedure (17) with a registration input of the radio transmitter data (17a) on a first process hierarchy, a request evaluation procedure (18) with an evaluation of the registered radio transmitter data on the basis of stored radio transmitter data (18a) on a higher process hierarchy, and a request decision procedure (19) with a decision about taking over the radio transmitter data into the radio transmitter database (8) on the higher process hierarchy.

6. Method according to claim 5,
**characterized in that**
during the execution of the request procedure (17), the request evaluation procedure (18) and the request decision procedure (19) a localization of a requested radio transmitter location is realized by indicating terrain/building coordinates or by an interactive entry into the two- or three-dimensional location scheme.

7. Method according to claim 6,
**characterized in that**
an interactive graphics is displayed when calling up the location scheme (12), wherein the location coordinate (11) in the interactive graphics is inserted into a topographical representation.

8. Method according to claim 1 to 7,
**characterized in that**
the request procedure (17) comprises a request processing procedure (17b) with an alteration possibility of the inputted radio transmitter data (17a) on a same and/or higher process hierarchy.

9. Method according to claim 1 to 5,
**characterized in that**
the request decision procedure (19) comprises an output of an enable indicator for officially enabling the operation of the radio transmitter.

10. Method according to claim 1,
**characterized in that**
the management of the totality of the radio transmitters comprises an administrative management of data set structures of the radio transmitter data, specifically of radio transmitter categories (28), location categories (36), operator categories and person-related operator data (33, 34) on a highest process hierarchy.

11. Method according to claim 10,
**characterized in that**
the management of the radio transmitter categories comprises adding, altering and/or deleting a radio frequency system category.

12. Method according to claim 10,
**characterized in that**
the management of the location categories comprises adding, altering and/or blocking real spatial regions and logically written areas.

13. Method according to claim 10,
**characterized in that**
the management of the operator categories and operator data comprises adding, altering and/or blocking organizational, logistic or individual person-related data.

14. Method according to claim 1 to 13,
**characterized in that**
the management of the totality of the radio transmitter comprises evaluation and search procedures with freely definable search filters and display modes as well as prediction procedures for determining an effect prognosis of a radio transmitter to be newly introduced.

15. Method according to one of the preceding claims,
**characterized in that**
a visualization of the totality of the radio transmitters is provided, wherein the topographical position of the locations of the radio transmitters is displayed.

16. Method according to one of the preceding claims,
**characterized in that**
during the storage of results of measurement checks and enable measurements a link to a database and/or to a directory with results stored therein is established.

17. Method according to one of the preceding claims,
**characterized in that**
a collision potential between different radio systems is stored in form of a compatibility matrix, wherein radio systems having a high collision potential are displayed in an appropriate and noticeable form.

18. Method according to one of the preceding claims,
**characterized in that**
a frequency allocation in the building or on the terrain is indicated by displaying a frequency beam, i.e. a stylized spectrum with individually registered applications.

## Revendications

1. Procédé d'exclusion des collisions de radiocommunication entre des systèmes à fréquences radioélectriques comprenant un ensemble d'émetteurs radioélectriques qui sont exploités à l'intérieur d'une région donnée et dont les plages de bande s'influencent partiellement,
selon lequel
une détection de l'émetteur radioélectrique (1) faisant partie de l'ensemble avec un contrôle métrologique en vue de détecter les éventuelles influences mutuelles de l'émetteur radioélectrique faisant partie de l'ensemble et une mémorisation des données de l'ensemble d'émetteurs radioélectriques avec une acquisition des données et une mémorisation des données d'émetteur radioélectrique (17a) dans une base de données d'émetteurs radioélectriques (8) sont effectuées,
**caractérisé par**
l'enregistrement d'un certain nombre de degrés de risque par le biais des influences mutuelles négatives détectées des émetteurs radioélectriques à l'intérieur de l'ensemble et l'affectation du nombre de degrés de risque à l'ensemble d'émetteurs radioélectriques, l'analyse des données d'émetteurs radioélectriques mémorisées dans la base de données pour déterminer les probabilités de collision mutuelle en accédant aux degrés de risque détectés et
l'exécution de procédures de validation, d'administration et de blocage (5, 6, 7) pour chaque émetteur radioélectrique en se basant sur la probabilité de collision spécifique à l'émetteur radioélectrique.

2. Procédé selon la revendication 1, **caractérisé en ce que** la détection et le contrôle métrologique des émetteurs radioélectriques incluent une acquisition des données d'emplacement dans l'espace des émetteurs radioélectriques, des données d'exploitation techniques des émetteurs radioélectriques et des données d'exploitant des émetteurs radioélectriques dans un système d'information (9) en vue de la gestion des émetteurs radioélectriques.

3. Procédé selon les revendications 1 et 2, **caractérisé en ce qu'**en combinaison avec l'acquisition des données d'emplacement dans l'espace des émetteurs radioélectriques est effectuée une classification des emplacements des émetteurs radioélectriques dans un schéma d'emplacement (12) bi- ou tridimensionnel en accédant à une série de coordonnées d'emplacement (11) sous la forme de plans de bâtiments/terrains depuis une base de données de CAO (10) d'un bâtiment et/ou d'un terrain.

4. Procédé selon les revendications 1 à 3, **caractérisé en ce que** l'acquisition des données d'exploitation des émetteurs radioélectriques inclut au moins une acquisition et une mesure des données techniques concernant la technique radioélectrique et l'acquisition des données d'exploitant des émetteurs radioélectriques inclut une acquisition de données personnelles.

5. Procédé selon les revendications 1 à 4, **caractérisé en ce que** l'exécution de la procédure de validation (5) comprend une procédure de demande (17) avec une saisie de demande de communication des données d'émetteur radioélectrique (17a) à un premier niveau hiérarchique de procédé, une procédure d'évaluation de la demande (18) avec une évaluation des données d'émetteur radioélectrique présentées en demande en accédant aux données d'émetteur radioélectrique (18a) mémorisées à un niveau hiérarchique de procédé supérieur et une procédure de décision de demande (19) avec une décision de prise en compte des données d'émetteur radioélectrique dans la base de données d'émetteurs radioélectriques (8) à un niveau hiérarchique de procédé supérieur.

6. Procédé selon la revendication 5, **caractérisé en ce que** lors de l'exécution de la procédure de demande (17), de la procédure d'évaluation de la demande (18) et de la procédure de décision de demande (19), une localisation d'un emplacement d'émetteur radioélectrique demandeur est effectuée par une indication des coordonnées du terrain/bâtiment ou par une saisie interactive dans le schéma bi- ou tridimensionnel de l'emplacement.

7. Procédé selon la revendication 6, **caractérisé en ce qu'**un graphique interactif est affiché lors de l'invocation du schéma d'emplacement (12), les coordonnées de l'emplacement (11) étant insérées dans le graphique interactif dans une représentation topographique.

8. Procédé selon les revendications 1 à 7, **caractérisé en ce que** la procédure de demande (17) comprend une procédure de traitement de demande (17b) avec une possibilité de modification des données d'émetteur radioélectrique (17a) saisies à un niveau hiérarchique égal et/ou supérieur.

9. Procédé selon les revendications 1 à 5, **caractérisé en ce que** la procédure de décision de demande (19) comprend la diffusion d'un identifiant de validation pour une validation d'exploitation officielle de l'émetteur radioélectrique.

10. Procédé selon la revendication 1, **caractérisé en ce que** la gestion de l'ensemble d'émetteurs radioélectriques comprend une gestion administrative des structures des jeux de données des données d'émetteur radioélectrique, notamment des catégories d'émetteurs radioélectriques (28), des catégories d'emplacements (36), des catégories d'exploitants et des données d'exploitant personnelles (33, 34) à un niveau hiérarchique supérieur.

11. Procédé selon la revendication 10, **caractérisé en ce que** la gestion des catégories d'émetteurs radioélectriques comprend l'insertion, la modification et/ou l'effacement d'une catégorie de systèmes à fréquences radioélectriques.

12. Procédé selon la revendication 10, **caractérisé en ce que** la gestion des catégories d'emplacement comprend l'insertion, la modification et/ou le blocage de régions réelles dans l'espace et de zones décrites de manière logique.

13. Procédé selon la revendication 10, **caractérisé en ce que** la gestion des catégories d'exploitants et des données d'exploitant personnelles comprend l'insertion, la modification et/ou le blocage de données individuelles en rapport avec la technique d'organisation, la logistique ou de nature personnelle.

14. Procédé selon les revendications 1 à 13, **caractérisé en ce que** la gestion de l'ensemble d'émetteurs radioélectriques comprend des procédures d'interprétation et de recherche avec des filtres de recherche et des modes d'affichage pouvant être définis librement ainsi que des procédures de prévision pour déterminer un effet prévisionnel d'un nouvel émetteur radioélectrique à introduire.

15. Procédé selon l'une des revendications précédentes, **caractérisé en ce qu'**il est prévu une visualisation de l'ensemble d'émetteurs radioélectriques, les emplacements des émetteurs radioélectriques étant affichés dans leur position topographique.

16. Procédé selon l'une des revendications précédentes, **caractérisé en ce que** lors de la mémorisation d'évènements des analyses métrologiques ou des mesures de validation, une liaison avec une base de données et/ou avec un répertoire dans lequel sont mémorisés des évènements est établie.

17. Procédé selon l'une des revendications précédentes, **caractérisé en ce qu'**un potentiel de collision entre différents systèmes radioélectriques est mémorisé sous la forme d'une matrice de compatibilité, les systèmes radioélectriques ayant un potentiel de collision élevé étant affichés sous une forme appropriée et voyante.

18. Procédé selon l'une des revendications précédentes, **caractérisé en ce qu'**une occupation des fréquences dans le bâtiment ou sur le terrain est indiquée par un affichage d'un rayon de fréquence, c'est-à-dire un spectre stylisé avec des applications enregistrées individuellement.
